# EUROPÄISCHE PATENTANMELDUNG

(11) **EP 4 454 745 A1**
(43) Veröffentlichungstag der Anmeldung: **30.10.2024**
(21) Anmeldenummer: 23020200.4
(22) Anmeldetag: 28.04.2023
(51) Int. Cl.: B01J 8/00, B01J 19/00, B01J 8/04, C01C 1/04, C07C 31/04, C01B 3/02

(54) **VERFAHREN UND ANLAGE ZUR HERSTELLUNG EINES VERFAHRENSPRODUKTS**

(71) Anmelder: Linde GmbH, 82049 Pullach (DE); Technische Universität München TUM ForTe Forschungsförderung und Technologietransfer, 80333 München (DE)
(72) Erfinder: Klein, Harald, 80333 München (DE); Peschel, Andreas, 82049 Pullach (DE); Fahr, Steffen, 80333 München (DE)
(74) Vertreter: Fischer, Werner

(57) **Zusammenfassung**

Es wird ein Verfahren (200) zur Herstellung eines Verfahrensprodukts vorgeschlagen, bei dem ein Eduktgemisch (1) einem Reaktor (10) zugeführt und in dem Reaktor (10) in einer exothermen Reaktion mit einer Aktivierungsenergie umgesetzt wird, wobei das Verfahren einen Anfahrbetrieb (210) umfasst, in dem eine Bereitstellung zumindest eines Teils der Aktivierungsenergie unter Verwendung eines oder mehrerer Anfahrheizers (17) vorgenommen wird, wobei das Verfahren einen nach dem Anfahrbetrieb (210) durchgeführten Produktionsbetrieb (220) umfasst, in dem eine Bereitstellung zumindest eines Teil der Aktivierungsenergie unter Verwendung von Wärmeenergie vorgenommen wird, die bei der exothermen Reaktion erzeugt wird, und wobei während des Produktionsbetriebs (220) eine Lastreduktion (222) vorgenommen wird, bei dem Verringerung einer pro Zeiteinheit in dem Reaktor (10) produzierten Menge des Verfahrensprodukts vorgenommen wird. Hierbei ist vorgesehen, dass während der Lastreduktion (222) ein Betrieb des Anfahrheizers (17) oder zumindest einer der mehreren Anfahrheizer (17) vorgenommen wird. Eine entsprechende Anlage (100) ist ebenfalls Gegenstand.

## Beschreibung

Die vorliegende Erfindung betrifft ein Verfahren und eine Anlage zur Herstellung eines Verfahrensprodukts, insbesondere von Ammoniak, gemäß den Oberbegriffen der unabhängigen Patentansprüche.

### Hintergrund

Um Treibhausgasemissionen und die Abhängigkeit von fossilen Brennstoffen langfristig verringern zu können, wird für die Produktion von Energie und unterschiedlicher Chemikalien vorteilhafterweise auf erneuerbare Energiequellen zurückgegriffen.

Im Gegensatz zu konventionellen bzw. fossilen Brennstoffen wie Erdgas, flüssigen Kohlenwasserstoffen und Kohle unterliegen diese Energiequellen, insbesondere aber die Sonnen- und Windenergie, bekanntermaßen stündlichen, täglichen und saisonalen Schwankungen in der Verfügbarkeit. Daher müssen verfahrenstechnische Prozesse, die mit derartigen erneuerbaren Energiequellen betrieben werden, diesen Schwankungen bis zu einem gewissen Grad folgen können oder über umfangreiche Mittel zur Energiespeicherung, beispielsweise in Form von elektrochemischen Speichern oder Wasserstoffspeichern, verfügen. Generell gilt, dass je flexibler ein entsprechender Prozess ist, desto weniger Speicherung erforderlich ist, was die wirtschaftliche Leistung des Prozesses verbessern kann.

Wenngleich die vorliegende Erfindung nachfolgend überwiegend unter Bezugnahme auf die Ammoniaksynthese erläutert wird, eignen sich ihre Ausgestaltungen auch für andere Verfahren und Anlagen zur Herstellung von Verfahrensprodukten, bei denen vergleichbare Probleme auftreten, insbesondere für exotherme Reaktionen in entsprechenden Reaktoren.

Es besteht der Bedarf nach Verbesserungen in entsprechenden Verfahren und Anlagen, insbesondere hinsichtlich eines flexibleren Betriebs unter Verwendung von fluktuierend zur Verfügung stehenden Energiequellen.

### Offenbarung der Erfindung

Vor diesem Hintergrund werden ein Verfahren und eine Anlage mit den jeweiligen Merkmalen der unabhängigen Patentansprüche vorgeschlagen. Ausgestaltungen sind Gegenstand der abhängigen Ansprüche und der nachfolgenden Beschreibung.

Das vorgeschlagene Verfahren dient zur Herstellung eines Verfahrensprodukts und umfasst, dass ein Eduktgemisch einem Reaktor zugeführt und in dem Reaktor in einer exothermen Reaktion mit einer Aktivierungsenergie umgesetzt wird, wobei das Verfahren einen Anfahrbetrieb umfasst, in dem eine Bereitstellung zumindest eines Teils der Aktivierungsenergie unter Verwendung eines oder mehrerer Anfahrheizer vorgenommen wird (nachfolgend ist nur zur Vereinfachung bisweilen von "einem" Anfahrheizer im Singular die Rede), wobei das Verfahren einen nach dem Anfahrbetrieb durchgeführten Produktionsbetrieb umfasst, in dem eine Bereitstellung zumindest eines Teil der Aktivierungsenergie unter Verwendung von Wärmeenergie vorgenommen wird, die bei der exothermen Reaktion erzeugt wird, und wobei während des Produktionsbetriebs eine Lastreduktion, d.h. eine Verringerung der pro Zeiteinheit in dem Reaktor produzierten Menge des Verfahrensprodukts vorgenommen wird. Es wird vorgeschlagen, dass während der Lastreduktion ein Betrieb des Anfahrheizers oder zumindest einer der mehreren Anfahrheizer vorgenommen wird.

Die Reduktion der produzierten Menge des Verfahrensprodukts kann beispielsweise durch eine Verringerung des dem Reaktor zugeführten Eduktgemischs erfolgen. Es kann auch gleich viel Eduktgemisch zugeführt, aber weniger umgesetzt werden (z.B. durch Temperaturerhöhung). Nicht umgesetzte Edukte können dann in einem Kreislauf zum Reaktor zurückgeführt werden. In diesem Fall wird dem Kreislauf zwar weniger Edukgemisch zugeführt, dem Reaktor selbst aber nicht.

Wie erwähnt, kann das Verfahren im Zuge der Herstellung von Ammoniak eingesetzt werden, ist hierauf aber nicht beschränkt. Die nachfolgenden Erläuterungen dienen daher nur der Veranschaulichung.

Die Ammoniaksynthese in Haber-Bosch-Kreisläufen im großen Maßstab ist sowohl effizient als auch kostengünstig. Es existieren unterschiedliche Ausgestaltungen, z.B. das sogenannte Linde-Ammoniak-Konzept, bei dem hochreiner Wasserstoff und Stickstoff verwendet werden. In den meisten konventionellen Anlagen findet die Ammoniakbildung in einem Reaktor statt, der aus mehreren adiabatischen Katalysatorbetten besteht, zwischen denen die jeweiligen Stoffströme durch Mischen mit Frischfeed oder durch indirekten Wärmeaustausch abgekühlt werden.

Die Reaktionsprodukte stromab eines entsprechenden Reaktors werden abgekühlt und der Ammoniak wird auskondensiert und aus dem Kreislauf abgeleitet, während die gasförmigen, nicht umgesetzten Reaktanden zusammen mit frischem Einsatzmaterial in den Reaktor zurückgeführt werden.

Entsprechende Prozesse können im Prinzip mit "grünem" Wasserstoff betrieben werden, d.h. mit Wasserstoff, der durch Wasserelektrolyse unter Verwendung erneuerbarer Energiequellen hergestellt wird. Herkömmliche Ammoniakanlagen, die auf einem entsprechenden Haber-Bosch-Kreislauf beruhen, können jedoch nur begrenzt im Teillastbereich betrieben werden und reagieren nur langsam auf Laständerungen, wie sie, wie eingangs erwähnt, bei der Verwendung erneuerbarer Energiequellen zu erwarten sind.

Die hier vorgeschlagene Lösung umfasst nun, eine primär für einen Anfahrbetrieb bereitgestellte Anfahrheizung während der Lastreduzierung zu verwenden, um die Lastwechselgeschwindigkeit des Reaktors zu erhöhen und die Überschreitung eines Mindestdrucks im Reaktor zu vermeiden.

Auf diese Weise kann in Ausgestaltungen der vorliegenden Erfindung insbesondere der begrenzten Lastflexibilität von konventionellen Ammoniakanlagen, die auf einem Haber-Bosch-Kreislauf basieren, oder auch Anlagen zur Erzeugung anderer Verfahrensprodukte begegnet werden. Diese begrenzte Lastflexibilität ist daher nicht mehr in dem Maße wie in herkömmlichen Konzepten der Fall der begrenzende Faktor für die Gesamtflexibilität einer entsprechenden "grünen" Anlage.

Beim Herunterfahren der Einspeisung in den Ammoniakkreislauf kommt es in entsprechenden Reaktoren zu einem erheblichen Druckabfall. Dieser Druckabfall kann durch Änderung der Bedingungen im Reaktor begrenzt werden, um den Umsatz zu verringern. Solche Änderungen können auch Änderungen der Reaktortemperatur umfassen. Wenn die Reaktortemperatur erhöht wird, lässt das Reaktionsgleichgewicht eine geringere Ammoniakproduktion zu, so dass weniger Material in Form von flüssigem Produkt aus dem Kreislauf ausgetragen wird und daher ein geringerer Druckabbau stattfindet. Allerdings läuft der Prozess der Erhöhung der Reaktortemperatur vergleichsweise langsam, so dass bei schnellen Abfahrvorgängen der Druck im Kreislauf vorübergehend unter einen bestimmten, für den Normalbetrieb festgelegten Mindestwert fallen kann. Entsprechendes gilt auch für andere Verfahren unter Verwendung exothermer Reaktionen.

Die im Rahmen von Ausgestaltungen der vorliegenden Erfindung vorgeschlagenen Maßnahmen ermöglichen dagegen deutlich schnellere Lastwechsel.

Der Begriff "Anfahrheizer" wird dabei vorliegend in der fachüblichen Weise verwendet. Beispielsweise kann in diesem Zusammenhang und insbesondere zu einsetzbaren Anfahrheizern auf Artikel wie Rasmussen, C.V., "Converter start-up heater: electric or fired?", Nitrogen 194: 30-35, 1991, verwiesen werden. Lediglich der Vollständigkeit halber sei nachfolgend kurz auf die Aufgabe von Anfahrheizern eingegangen.

Anlagen zur Ammoniakherstellung laufen in der Regel lange Zeit ohne Abschaltung in der Nähe ihres optimalen Betriebspunkts. Dennoch werden für die wenigen Anfahrvorgänge, die während der Lebensdauer einer entsprechenden Anlage durchgeführt werden, spezielle Apparate in Form der genannten Anfahrheizer installiert. Beispielsweise wird in der US 2011/123404 A1 die Verwendung eines elektrischen Anfahrheizers im Druckmantel eines Ammoniakreaktors vorgeschlagen.

Die Ammoniaksynthesereaktion, bei der Stickstoff und Wasserstoff in Gegenwart eines Katalysators miteinander reagieren, ist exotherm und selbsterhaltend. Die Reaktion kann jedoch nur bei höheren Temperaturen anlaufen. Beim Anfahren einer Ammoniakanlage aus dem kalten Zustand müssen daher der Ammoniakreaktor und seine Katalysatormasse durch entsprechende Anfahrheizer vorgeheizt werden. Bei jedem Anfahren oder Wiederaufheizen ist der Erhitzer für einen längeren Zeitraum im Dauerbetrieb. Während des normalen Betriebs wird er in herkömmlichen Verfahren abgeschaltet. Der am häufigsten eingesetzte Anfahrheizer ist der direkt befeuerte Typ, es werden aber auch elektrische Erhitzer verwendet.

Die hier vorgeschlagenen Maßnahmen können umfassen, während des Produktionsmodus eine Last von einem ersten Betriebspunkt auf einen zweiten Betriebspunkt zu senken. Bei Verwendung eines Reaktors mit mehreren Katalysatorbetten wird dabei die Vorlauftemperatur zumindest des letzten Katalysatorbetts erhöht. In Ausgestaltungen kann auch vorgesehen sein, die Vorlauftemperaturen aller Katalysatorbetten stromab eines jeweiligen Zwischenkühlers während des Lastwechsels zu erhöhen. Diese Temperaturerhöhung wird zumindest teilweise durch den Einsatz des Anfahrheizers erreicht. Der Reaktor kann also in entsprechenden Ausgestaltungen mehrere seriell angeordnete Reaktionsbetten aufweisen, wobei stromab eines oder mehrerer dieser Reaktionsbetten die Wärmeübertragung oder jeweils ein Teil der Wärmeübertragung durchgeführt wird, und eine Veränderung einer Menge der bei der Wärmeübertragung übertragenen Wärme kann bei der Lastreduktion vorgenommen werden. Auf diese Weise kann eine dosierte und zielgerichtete Beeinflussung erfolgen.

Eine Temperatur des den Reaktor verlassenden Gases kann erhöht werden, indem ein größerer Teil des Einsatzmaterials zu einem oder mehreren Zwischenkühlern oder Feed-Effluent-Wärmetauschern geleitet wird und dadurch die Zwischenkühlung bzw. Endkühlung verringert wird.

Bei Teillast ist das Reaktionsgleichgewicht aufgrund der verringerten Durchflussmenge im Reaktor erreicht oder nahezu erreicht. Je höher die Gleichgewichtstemperatur ist, desto weniger Ammoniak ist bei Gleichgewichtsbedingungen vorhanden. Eine Erhöhung der Austrittstemperatur des letzten Katalysatorbetts verringert also den Ammoniakanteil im Reaktorablauf. Dies wiederum verringert die Menge des aus dem Kreislauf ausgetragenen Materials und trägt so dazu bei, einen höheren Kreislaufdruck aufrechtzuerhalten als ohne diese Maßnahme.

Eine Möglichkeit, die Austrittstemperatur des letzten Katalysatorbetts zu erhöhen, besteht darin, die Zwischenkühlung zu verringern. In einem Extremfall wird auf die Zwischenkühlung ganz verzichtet, und die vorhandenen Katalysatorbetten wirken in einem solchen Fall wie ein einziges.

In Ausgestaltungen der Erfindung kann eine Bereitstellung zumindest einer Komponente des Eduktgemischs, im Fall einer Ammoniaksynthese insbesondere Wasserstoff, unter Verwendung von regenerativ erzeugter elektrischer Energie aus einem Inselnetz vorgesehen sein, in dem eine Energieerzeugungseinheit zur regenerativen Erzeugung elektrischer Energie bereitgestellt ist. Die Lastreduktion kann dann vorgenommen werden, wenn die regenerativ erzeugte elektrische Energiemenge abnimmt bzw. unter einen vorgegebenen Schwellwert sinkt. Der Begriff "Inselnetz" bezeichnet dabei ein elektrisches Netz, das nicht an ein überregionales, transnationales oder transkontinentales Stromnetz angeschlossen ist, so dass stets nur mit der durch die Energieerzeugungseinheit, beispielsweise umfassend eine oder mehrere Photovoltaik- oder Windkraftanlagen, bereitgestellten elektrischen Energie auskommen werden muss. Ein Inselnetz muss neben den genannten Komponenten nicht notwendigerweise weitere Komponenten aufweisen.

In alternativen Ausgestaltungen kann eine Bereitstellung zumindest einer Komponente des Eduktgemischs unter Verwendung von elektrischer Energie aus einem Fernnetz erfolgen, wobei die Lastreduktion dann vorgenommen wird, wenn eine Verfügbarkeit der elektrischen Energie abnimmt und/oder ein Preis der elektrischen Energie über einen vorgegebenen Schwellwert steigt. Das "Fernnetz" kann insbesondere ein überregionales, transnationales oder transkontinentales Stromnetz sein, das eine Vielzahl von Energieerzeugungseinrichtungen, insbesondere unterschiedlicher Art, und eine Vielzahl von Verbrauchern, bspw. Industrieanlagen, Wohnhäuser, Bürogebäude, Elektromobilitätseinrichtungen usw. umfasst.

Der Betrieb des Anfahrheizers oder zumindest eines der mehreren Anfahrheizer kann in Ausgestaltungen insbesondere auf Grundlage einer oder mehrerer in dem Verfahren erfasster Größen vorgenommen werden. Auf diese Weise kann eine adaptive Anpassung der Leistung des oder der Anfahrheizers erfolgen. Eine entsprechende, in dem Verfahren erfasste Größe oder zumindest eine der mehreren, in dem Verfahren erfassten Größen kann einen oder mehrere Druckwerte in dem Reaktor umfassen, so dass einem Druckabfall direkt entgegengewirkt werden kann. Zusätzlich kann es in Ausgestaltungen der Erfindung vorgesehen und vorteilhaft sein, ein oder mehrere Temperaturwerte zu erfassen, und zwar in den Reaktorbetten, in den die Reaktorbetten verlassenden Strömen und/oder in den in die Reaktorbetten eintretenden Strömen, wobei insbesondere ein Austrittsstrom des letzten und ein Eintrittsstrom des ersten Bettes aussagekräftige Werte liefern.

In Ausgestaltungen des vorgeschlagenen Verfahrens kann die Bereitstellung zumindest eines Teils der Aktivierungsenergie in dem Produktionsbetrieb eine einstellbare Wärmeübertragung von einem oder mehreren, unter Verwendung des Reaktors gebildeten Stoffströmen auf das Eduktgemisch und/oder auf einen oder mehrere Teilströme des Eduktgemischs umfassen.

Der Anfahrheizer kann in Ausgestaltungen der Erfindung innerhalb oder außerhalb eines Druckmantels des Reaktors installiert sein. Die Wärme kann elektrisch oder durch die Verbrennung eines Brennstoffs, z.B. Erdgas, Ammoniak oder Wasserstoff, erzeugt werden. Alternativ kann die Wärme aus einem Wärmespeicher, z.B. einem Salzschmelzespeicher, entnommen werden, der zuvor mit Strom, einem der oben genannten Brennstoffe, der im Ammoniakreaktor freigesetzten Wärme, oder einer Kombination davon geladen wurde.

Die Bereitstellung zumindest eines Teils der Aktivierungsenergie in dem Anfahrbetrieb und bei den anderen Betriebsphasen des Anfahrheizers kann eine einstellbare Beheizung des Eduktgemischs und/oder eines oder mehrerer Teilströme des Eduktgemischs umfassen. Der Anfahrheizer kann mit vorgewärmtem oder frischem Einsatzmaterial beschickt werden.

Im Rahmen von Ausgestaltungen der Erfindung kann bzw. können ein oder mehrere weitere einstellbare Betriebsparameter des Verfahrens während der Lastreduktion verändert werden. Der eine oder die mehreren Betriebsparameter kann bzw. können eine Drehzahl eines Kreislaufverdichters und/oder ein Betriebsparameter eines parallel zu dem Kreislaufverdichter angeordneten Ventils oder einer anderen Sperreinrichtung sein oder einen solchen Parameter umfassen. Die Erfindung kann also mit anderen fortschrittlichen Regelungsmethoden kombiniert werden, die in herkömmlichen Haber-Bosch-Kreisläufen nicht vorhanden sind.

Beispielsweise kann der Druck innerhalb von Grenzen geregelt werden, indem die Geschwindigkeit des Kreislaufverdichters im Haber-Bosch-Kreislauf verändert oder ein Ventil in einer parallel zum Kreislaufkompressor angeordneten Leitung geschaltet wird. Dies allein ermöglicht es jedoch nicht unbedingt, den Druck innerhalb des zulässigen Bereichs zu halten, ohne andere betriebliche Zwänge zu verletzen. Entsprechende Maßnahmen können jedoch nützlich sein für eine Feineinstellung des Drucks in der Nähe des gewünschten Betriebspunkts.

Ausgestaltungen des vorgeschlagenen Verfahrens können zur Herstellung von Ammoniak, Methan oder Methanol als Verfahrensprodukt verwendet werden.

Das oben dargestellte Reaktorsystem ist beispielhaft und das Grundkonzept der Erfindung kann auf andere Reaktortypen übertragen werden. Die Erfindung kann also neben der Ammoniaksynthese auch in anderen chemischen Prozessen eingesetzt werden, bei denen eine gleichgewichtsbegrenzte exotherme Reaktion abläuft. Dazu gehören zum Beispiel die Methanol- und Methansynthese.

Neben dem Einsatz der Anfahrheizung zur Lastreduzierung kann diese in weiteren Ausgestaltungen der Erfindung auch zur Erweiterung des Lastbereichs des Prozesses verwendet werden. Durch den kontinuierlichen Betrieb des Anfahrheizers bei geringer Last kann aufgrund des höheren Gleichgewichts eine niedrigere Teillast erreicht werden, da am Reaktorausgang eine höhere Gleichgewichtstemperatur erreicht wird.

Neben einem Anfahrheizer, der den Reaktoreinlass direkt beheizt, kann auch ein Wärmepuffersystem, das elektrische Energie in Form von Wärme speichert, verwendet werden. Um die erforderliche Eintrittstemperatur zu erreichen, können beispielsweise Synteme mit Thermoöl oder einer Salzschmelze verwendet werden. In diesem Fall kann die Wärme in diesen Systemen zu Zeiten niedriger Stromkosten gespeichert und in Phasen geringer Ammoniakproduktion freigesetzt werden, in denen die Elektrolyse kostspielig oder unmöglich ist.

Die Vorteile des Einsatzes der Anfahrheizung bei Lastwechseln in einer Ammoniakanlage umfasse domit eine Erhöhung der realisierbaren Lastwechselrate durch Verringerung der Druckschwankungen und die Hinzufügung einer Regelgröße für die Reaktorsteuerung.

Die vorgeschlagene Anlage zur Herstellung eines Verfahrensprodukts weist einen Reaktor und einen Anfahrheizer auf und ist dafür eingerichtet, ein Eduktgemisch dem Reaktor zuzuführen und in dem Reaktor in einer exothermen Reaktion mit einer Aktivierungsenergie umzusetzen, einen Anfahrbetrieb durchzuführen, in dem eine Bereitstellung zumindest eines Teils der Aktivierungsenergie unter Verwendung eines oder mehrerer Anfahrheizers vorgenommen wird, und nach dem Anfahrbetrieb einen Produktionsbetrieb durchzuführen, in dem eine Bereitstellung zumindest eines Teil der Aktivierungsenergie unter Verwendung von Wärmeenergie vorgenommen wird, die bei der exothermen Reaktion erzeugt wird, und während des Produktionsbetriebs eine Lastreduktion vorzunehmen, bei dem eine Verringerung einer pro Zeiteinheit in dem Reaktor gebildeten Menge des Verfahrensprodukts vorgenommen wird. Es ist vorgesehen, dass die Anlage dafür eingerichtet ist, während der Lastreduktion einen Betrieb des Anfahrheizers oder zumindest einer der mehreren Anfahrheizer vorzunehmen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 eine Anlage zur Herstellung von Ammoniak veranschaulicht,
Figur 2 Aspekte eines nicht erfindungsgemäßen Verfahrens veranschaulicht,
Figur 3 Aspekte eines Verfahrens gemäß einer Ausgestaltung veranschaulicht, und
Figur 4 ein Verfahren gemäß einer Ausgestaltung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Ammoniaksynthese erläutert. Wie mehrfach angesprochen, ist die Erfindung jedoch nicht hierauf beschränkt.

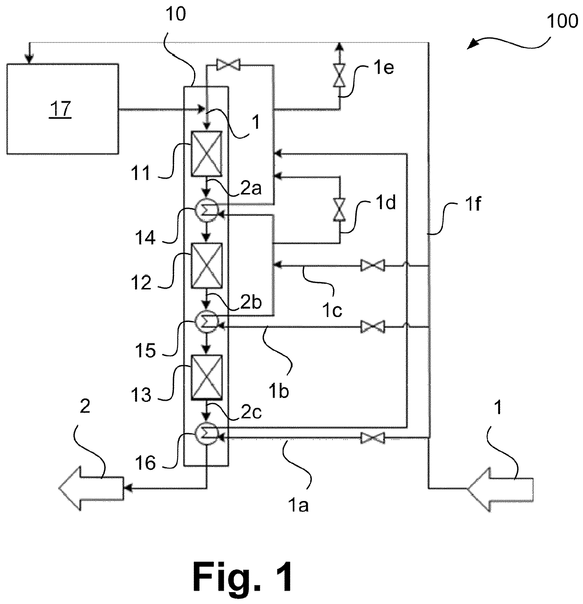

In Figur 1 ist eine Anlage zur Herstellung von Ammoniak dargestellt, die einer Ausgestaltung der Erfindung zugrunde liegen kann, und insgesamt mit 100 bezeichnet.

Die Anlage 100 umfasst einen Reaktor 10, der im dargestellten Beispiel drei katalytische Betten 11, 12, 13 aufweist, stromab derer jeweils Zwischen- bzw. Nachkühler 14, 15, 16 angeordnet sind. Ferner ist ein Anfahrheizer 17 vorhanden. Der Reaktor 10 ist für den Betrieb mit geringer Teillast geeignet.

Dem Reaktor 10 wird ein Eduktgemisch 1 zugeführt, welches über eine nicht gesondert bezeichnete Ventilanordnung in Teilströmen 1a, 1b, 1c den Zwischen- bzw. Nachkühlern 14, 15, 16 zugeführt wird. In beliebiger Weise können Bypässe 1d, 1e vorhanden sein, und ein verbleibender Rest 1f des Eduktgemischs 1 kann dem Anfahrheizer 17 zugeführt werden. Das hier veranschaulichte Beispiel schränkt die Erfindung nicht ein und beliebige Verschaltungen können vorhanden sein.

Das Einsatzgemisch ist and der Stelle an der es, wieder zusammengefasst, dem ersten Katalysatorbett 11 zugeführt wird, wieder mit 1 bezeichnet. Seine Temperatur an dieser Stelle richtet sich nach den Bedingungen in den Zwischen- bzw. Nachkühlern 14, 15, 16 und der entsprechenden Aufteilung auf diese und den Betrieb und die Speisung des Anfahrheizers 17.

In Figur 1 ist dargestellt, dass der Abfluss des Anfahrheizers 17 ohne weiteren indirekten Wärmeaustausch direkt in das erste Katalysatorbett 11 eingespeist werden. Alternativ dazu kann das entsprechende Eduktgemisch einen oder mehrere Zwischenkühler durchlaufen, bevor es in eines der Katalysatorbetten 11, 12, 13 gelangt. Ein aus dem Reaktor 10 abströmendes Produktgemisch ist mit 2 bezeichnet, die jeweiligen Zwischenströme stromauf der Zwischen- bzw. Nachkühler 14, 15, 16 sind jeweils mit 2a, 2b, 2c angegeben.

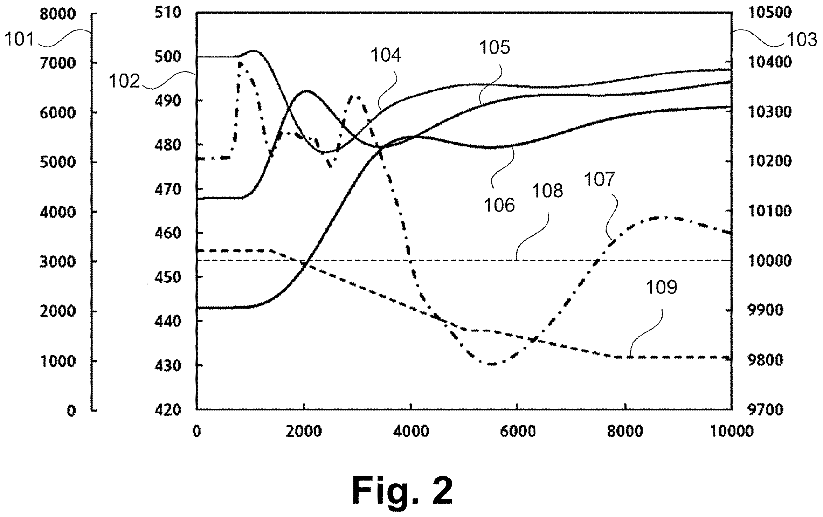

In Figur 2 sind Aspekte eines nicht erfindungsgemäßen Verfahrens in Form eines Diagramms veranschaulicht, in dem auf der Horizontalachse eine Zeit in Sekunden, auf einer Vertikalachse 101 ein Massefluss eingesetzten Wasserstoffs in kg/h, auf einer zweiten Vertikalachse 102 eine Temperatur in °C, und auf einer dritten Vertikalachse 103 ein Druck in kPa angegeben ist. Die entsprechend dargestellten Werte ergeben sich beispielsweise in der Anlage 100 gemäß Figur 1.

Mit 104 ist eine Temperatur stromab des ersten Katalysatorbetts 11, mit 105 eine Temperatur stromab des zweiten Katalysatorbetts 12, und mit 106 eine Temperatur stromab des dritten Katalysatorbetts 13 dargestellt. Ein Druck in dem Reaktor 10 bzw. einem entsprechenden Kreislauf ist mit 107, ein zulässiger Minimaldruck mit 108 und der Massefluss des Wasserstoffs mit 109 angegeben ist.

Figur 2 veranschaulicht damit die relativen Verläufe der Betttemperaturen der drei beispielsweise in Figur 1 dargestellten Katalysatorbetten 11, 12, 13 für ein ausgewähltes Verfahren zur Lastreduzierung ohne Verwendung eines Anfahrheizers. Wie aus den Betttemperaturen ersichtlich, ist zu erkennen, dass der gewünschte Zustand hoher Austrittstemperaturen der drei Betten nicht innerhalb des dargestellten Zeitraums erreicht wird. Infolge der langsamen Temperaturänderung sinkt der Druck 107 vorübergehend unter den markierten zulässigen Mindestdruck 108.

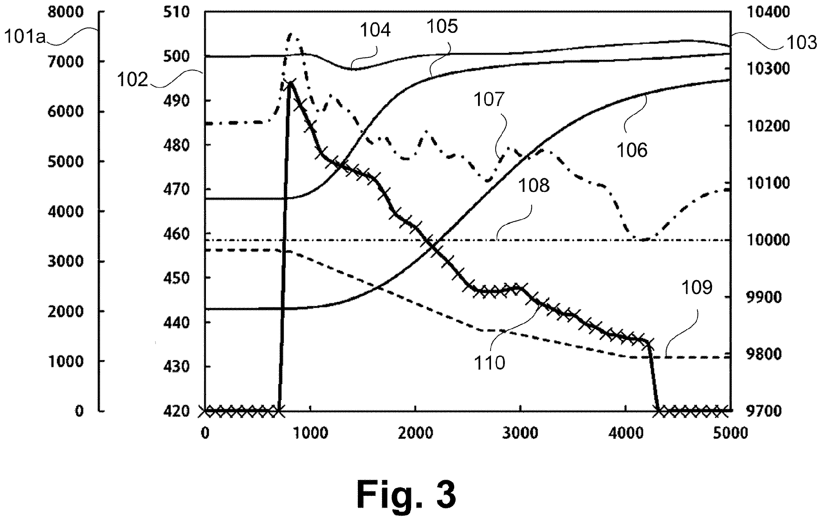

Figur 3 veranschaulicht Aspekte eines Verfahrens gemäß einer Ausgestaltung der Erfindung veranschaulicht, wobei die Achsen bzw. Verläufe 102 bis 109 den bereits zu Figur 2 erläuterten Achsen bzw. Verläufen 102 bis 109 entsprechen. Die hier dargestellte erste Vertikalachse 101a gibt hier jedoch zugleich eine Heizleistung des Anfahrheizers 17 in kW an, der entsprechende Verlauf ist mit 110 angegeben.

Figur 3 veranschaulicht den gleichen Vorgang der Lastreduzierung mit der exakt gleichen Rampe in der Wasserstoffzufuhr wie gemäß Figur 2. In diesem Fall wird die Laständerung jedoch durch den Anfahrheizer 17 unterstützt. Dies ermöglicht einen günstigeren Verlauf der Betttemperaturen und verhindert, dass der Druck 107 unter den vorgegebenen Mindestdruck 108 sinkt.

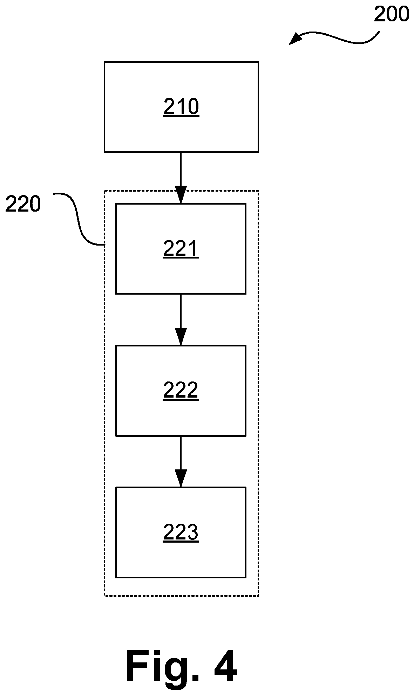

Figur 4 veranschaulicht ein Verfahren gemäß einer Ausgestaltung der Erfindung in vereinfachter Blockdarstellung, das insgesamt mit 200 bezeichnet ist. Die entsprechenden Verfahrensschritte werden nun nochmals unter Bezugnahme auf die Figur 1 und die dort dargestellten Elemente erläutert.

In dem Verfahren 200 wird generell das Eduktgemisch 1 dem Reaktor 10 zugeführt und in dem Reaktor 10 in einer exothermen Reaktion mit einer Aktivierungsenergie umgesetzt. Ein erster Verfahrensschritt bezeichnet einen Anfahrbetrieb 210 umfasst, in dem eine Bereitstellung zumindest eines Teils der Aktivierungsenergie unter Verwendung des Anfahrheizers 17 vorgenommen wird.

Ist eine ausreichende Aufheizung erfolgt und die Umsetzung angelaufen, kann in einem nächsten Schritt ein Produktionsbetrieb 220 durchgeführt werden, in dem eine Bereitstellung zumindest eines Teils der Aktivierungsenergie unter Verwendung von Wärmeenergie vorgenommen wird.

In dem Produktionsbetrieb kann in einem ersten Schritt 221 ein Betrieb bei einem ersten Lastpunkt erfolgen. Ein weiterer Schritt umfasst eine Lastreduktion 222, wobei, wie hier vorgeschlagen, in dieser eine Verringerung einer pro Zeiteinheit in dem Reaktor 10 gebildeten Menge des jeweiligen Verfahrensprodukts, vorliegend Ammoniak, vorgenommen wird, bis in einem nächsten Schritt 223 ein zweiter, geringerer Lastpunkt erreicht ist. Während der Lastreduktion 222 wird, wie insbesondere unter Bezugnahme auf Figur 3 dargestellt, ein Betrieb des Anfahrheizers 17 vorgenommen, um einen übermäßigen Druckabfall zu verhindern.

## Patentansprüche

**1.** Verfahren (200) zur Herstellung eines Verfahrensprodukts, bei dem ein Eduktgemisch (1) einem Reaktor (10) zugeführt und in dem Reaktor (10) in einer exothermen Reaktion mit einer Aktivierungsenergie umgesetzt wird, wobei das Verfahren einen Anfahrbetrieb (210) umfasst, in dem eine Bereitstellung zumindest eines Teils der Aktivierungsenergie unter Verwendung eines oder mehrerer Anfahrheizers (17) vorgenommen wird, wobei das Verfahren einen nach dem Anfahrbetrieb (210) durchgeführten Produktionsbetrieb (220) umfasst, in dem eine Bereitstellung zumindest eines Teil der Aktivierungsenergie unter Verwendung von Wärmeenergie vorgenommen wird, die bei der exothermen Reaktion erzeugt wird, und wobei während des Produktionsbetriebs (220) eine Lastreduktion (222) vorgenommen wird, bei dem Verringerung einer pro Zeiteinheit in dem Reaktor (10) produzierten Menge des Verfahrensprodukts vorgenommen wird, **dadurch gekennzeichnet, dass** während der Lastreduktion (222) ein Betrieb des Anfahrheizers (17) oder zumindest einer der mehreren Anfahrheizer (17) vorgenommen wird.

**2.** Verfahren (200) nach Anspruch 1, das eine Bereitstellung zumindest einer Komponente des Eduktgemischs (1) unter Verwendung von regenerativ erzeugter elektrischer Energie aus einem Inselnetz umfasst, in dem eine Energieerzeugungseinheit zur Bereitstellung der regenerativ erzeugten elektrische Energie bereitgestellt ist, wobei die Lastreduktion dann vorgenommen wird, wenn die regenerativ erzeugte elektrische Energie abnimmt.

**3.** Verfahren (200) nach Anspruch 1 oder 2, das eine Bereitstellung zumindest einer Komponente des Eduktgemischs (1) unter Verwendung von elektrischer Energie aus einem Fernnetz umfasst wobei die Lastreduktion dann vorgenommen wird, wenn eine Verfügbarkeit der elektrischen Energie abnimmt und/oder ein Preis der elektrischen Energie über einen vorgegebenen Schwellwert steigt.

**4.** Verfahren (200) nach einem der vorstehenden Ansprüche, bei dem der Betrieb des Anfahrheizers (17) oder zumindest eines der mehreren Anfahrheizer (17) auf Grundlage einer oder mehrerer, in dem Verfahren (200) erfasster Größen vorgenommen wird.

**5.** Verfahren (200) nach Anspruch 4, bei dem die in dem Verfahren (200) erfasste Größe oder zumindest eine der mehreren, in dem Verfahren (200) erfassten Größen einen oder mehrere Druckwerte in dem Reaktor (10) und/oder einen oder mehrere Temperaturwerte umfasst.

**6.** Verfahren (200) nach einem der vorstehenden Ansprüche, bei dem die Bereitstellung zumindest eines Teils der Aktivierungsenergie in dem Produktionsbetrieb (220) eine einstellbare Wärmeübertragung von einem oder mehreren, unter Verwendung des Reaktors (10) gebildeten Stoffströmen (2a-2c) auf das Eduktgemisch (1) und/oder auf einen oder mehrere Teilströme (1a-1f) des Eduktgemischs (1) umfasst.

**7.** Verfahren (200) nach Anspruch 6, bei dem der Reaktor (10) mehrere seriell angeordnete Reaktionsbetten (11-13) aufweist, wobei stromab eines oder mehrerer dieser Reaktionsbetten (11-13) die Wärmeübertragung oder jeweils ein Teil der Wärmeübertragung durchgeführt wird.

**8.** Verfahren (200) nach Anspruch 6 oder Anspruch 7, bei dem eine Veränderung einer Menge der bei der Wärmeübertragung übertragenen Wärme bei der Lastreduktion (222) vorgenommen wird.

**9.** Verfahren (200) nach einem der vorstehenden Ansprüche, bei dem die Bereitstellung zumindest eines Teils der Aktivierungsenergie in dem Anfahrbetrieb (210) eine einstellbare Beheizung des Eduktgemischs (1) und/oder eines oder mehrerer Teilströme (1a-1f) des Eduktgemischs (1) umfasst.

**10.** Verfahren (200) nach einem der vorstehenden Ansprüche, bei dem ein oder mehrere weiterer einstellbarer Betriebsparameter des Verfahrens (200) während der Lastreduktion (222) verändert wird oder werden.

**11.** Verfahren (200) nach Anspruch 10, bei dem der eine oder die mehreren Betriebsparameter eine Drehzahl eines Kreislaufverdichters und/oder ein Betriebsparameter eines parallel zu dem Kreislaufverdichter angeordneten Ventils ist oder umfassen.

**12.** Verfahren (200) nach einem der vorstehenden Ansprüche, das zur Herstellung von Ammoniak, Methan oder Methanol als Verfahrensprodukt verwendet wird.

**13.** Anlage (100) zur Herstellung eines Verfahrensprodukts mit einem Reaktor (10) und einem Anfahrheizer (17), wobei die Anlage (100) dafür eingerichtet ist, ein Eduktgemisch (1) dem Reaktor (10) zuzuführen und in dem Reaktor (10) in einer exothermen Reaktion mit einer Aktivierungsenergie umzusetzen, einen Anfahrbetrieb (210) durchzuführen, in dem eine Bereitstellung zumindest eines Teils der Aktivierungsenergie unter Verwendung eines oder mehrerer Anfahrheizers (17) vorgenommen wird, und nach dem Anfahrbetrieb (210) einen Produktionsbetrieb (220) durchzuführen, in dem eine Bereitstellung zumindest eines Teil der Aktivierungsenergie unter Verwendung von Wärmeenergie vorgenommen wird, die bei der exothermen Reaktion erzeugt wird, und während des Produktionsbetriebs (220) eine Lastreduktion (222) vorzunehmen, bei dem eine Verringerung einer pro Zeiteinheit in dem Reaktor (10) produzierten Menge des Verfahrensprodukts vorgenommen wird, **dadurch gekennzeichnet, dass** die Anlage (100) dafür eingerichtet ist, während der Lastreduktion (222) einen Betrieb des Anfahrheizers (17) oder zumindest einer der mehreren Anfahrheizer (17) vorzunehmen.

**12.** Anlage (100) nach Anspruch 11, die zur Durchführung eines Verfahrens nach einem der Ansprüche 1 bis 10 eingerichtet ist.
